# EUROPÄISCHE PATENTANMELDUNG

(11) **EP 0 672 596 A1**
(43) Veröffentlichungstag der Anmeldung: **20.09.1995**
(21) Anmeldenummer: 95103473.5
(22) Anmeldetag: 10.03.1995
(51) Int. Cl.: B65G 69/28

(54) **Überladebrücke für Rampen**

(30) Priorität: 19.03.1994 DE 4409505
(71) Anmelder: Alten, Kurt, D-30974 Wennigsen (DE)
(72) Erfinder: Alten, Kurt, D-30974 Wennigsen (DE)
(74) Vertreter: Depmeyer, Lothar

(57) **Zusammenfassung**

Die Erfindung betrifft eine Überladebrücke für Rampen mit einer schwenkbaren Brückenplatte und einer vorne daran angeordneten, ein- und ausfahrbaren Verlängerung (12), wobei die durch Unterzüge versteifte Brückenplatte am vorderen Ende einen die Unterzüge unterfangenden Querträger (6) aufweist. Um die Brückenlast erhöhen zu können, ist aufgrund der Erfindung der Querträger an den beiden Brückenrändern mit einem hakenförmigen Widerlager (20) versehen, in das ein die Verlängerung (12) versteifendes Längsprofil (17) mit einem Flansch hineinragt.

## Beschreibung

Die Erfindung betrifft eine Überladebrücke für Rampen nach dem Gattungsbegriff des Anspruchs 1.

Bei den bekannten Überladebrücken dieser Art, die in der DE-PS 38 o5 211 beschrieben sind, ist die ein- und ausfahrbare Verlängerung im Bereich der beiden Brückenränder mit einem Vorsprung versehen, der bei unter Last stehender Brücke ein an der Brückenplatte, und zwar ein an deren Seitenblechen befestigtes Widerlager in Form eines längs zur Brücke verlaufenden Profils unterfasst. Dadurch sollen unerwünschte Verformungen der Brückenplatte im Randbereich insb. an den oben gelegenen Deckblechen der Brückenplatte durch Druckeinwirkung auf diese Bleche von unten her ausgeschaltet werden. Ein so ausgeführtes Widerlager ist vergleichsweise aufwendig, da es sich über den gesamten möglichen Hub der Verlängerung erstreckt.

Der Erfindung liegt die Aufgabe zugrunde, die vorgenannte Belastung der Brückenplatte in den beiden Randbereichen durch eine vereinfachte und noch wirksamere Ausbildung des Widerlagers auszuschalten.

Zur Lösung dieser Aufgabe sind erfindungsgemäss bei Überladebrücken mit einem sich im vorderen Bereich der Brückenplatte befindlichen, deren Unterzüge unterfangenden, sich von einem zum anderen Seitenblech erstreckenden Querträger die Widerlager auf diesem Querträger angeordnet und zudem werden die die Widerlager unterfassenden Vorsprünge der Verlängerung von einem längs zur Verlängerung verlaufenden Versteifungsprofil der Verlängerung gebildet.

Demgemäss werden die Widerlager nicht an den Seitenblechen befestigt, sondern auf den erwähnten Querträgern, die somit nicht nur die Unterzüge der Brückenplatte unterfangen sollen, sondern eine zusätzliche Aufgabe erfüllen. Die Widerlager können als kurze hakenförmige Formkörper ausgeführt und unmittelbar oder unter Nutzung von Zwischenstücken mit dem Querträger z.B. durch Schweissen verbunden sein. Als Vorsprung dient hierbei ein ohnehin vorhandenes Versteifungsprofil der Verlängerung, das mit einem Schenkel od. dgl. den am Querträger befindlichen Formkörper unterfasst. Vorzugsweise wird dabei ein Rand eines Flansches von Doppel-T-Trägern als Vorsprung benutzt, die in Parallelstellung unterhalb der Verlängerung zu deren Versteifung vorgesehen sind.

Die Erfindung wird anhand der Zeichnung erläutert, in der ein Ausführungsbeispiel der Erfindung dargestellt ist. Es zeigt :
Fig. 1 eine Überladebrücke für Rampen in einer Teilunteransicht,
Fig. 2 einen Längsschnitt durch die Brücke gemäss Fig. 1,
Fig. 3 einen Schnitt nach der Linie III -III von Fig. 2 und
Fig. 4 einen Schnitt nach der Linie IV - IV von Fig. 2.

Die Brückenplatte 1 ist am rampenseitigen hinteren Ende um eine waagerechte Achse an der Rampe 2 verschwenkbar gelagert. Sie hat ein Deckblech 3 und darunter zur Versteifung längs verlaufende Unterzüge 4, die sich bis an das vordere Plattenende erstrecken. An beiden Seiten wird die Brückenplatte 1 durch senkrechte Seitenbleche 5 abgeschlossen, die im wesentlichen dreieck- bzw. trapezförmig gestaltet sind.

Die Unterzüge 4 sind über ihre Stirnflächen mit einem u-förmigen Querträger 6 fest verbunden, der sich auch unterhalb der Unterzüge 4, jedoch auch am vorderen Ende der Brücke befinden kann. Dieser Querträger 6 ist zudem an den beiden Enden fest mit sen Seitenblechen 5 verbunden. Im Abstand vom Querträger 6 - etwa auf einem Drittel der Brückenlänge - ist eine weitere Querverbindung vorgesehen, und zwar durch eine Stange 9, die die Unterzüge 4 durchsetzt und ebenfalls an den Seitenblechen 5 befestigt ist. Diese Stange ist zudem mit mehreren aufgezogenen Buchsen 10 versehen.

Vorne an der Brückenplatte 1 ist eine durch einen Arbeitszylinder 11 ein- und ausfahrbare Verlängerung 12 vorgesehen, deren Auflageteil 13 in der Brückenebene liegt und deren senkrechter Schenkel 14 als Anschlag dient. Die sich über die Brückenbreite einstückig erstreckende Verlängerung 12 ist über Krallen 15 mit einem senkrechten Flachstahl 16 verbunden. Hier sind in Brückenlängsrichtung verlaufende, einander parallele Doppel-T-Träger 17 befestigt, die sich im vorderen Bereich auf dem Querträger 6 abstützen und etwa auf halber Länge auf der Stange 9 aufliegen und dort durch die Buchsen 10 zentriert und geführt sind.

In Verlängerung des Auflageteils 13 sind auf den Trägern 17 Platten 18 befestigt, die die Räume zwischen benachbarten Unterzügen 4 bzw. seitlich an der Brücke zwischen einem Unterzug 4 und einem Seitenblech 5 ausfüllen und bei ausgefahrener Verlängerung 12 Bestandteil der Fahrbahn werden. Die Länge der Platten 18 bestimmt also den möglichen Hub der Verlängerung 12.

An beiden Rändern der Brücke befinden sich sog. Einstosszungen als Abschnitte 12' der Verlängerung 12. Auch sie haben einen Träger 17 und eine Platte 18.

Im Bereich der beiden Brückenränder ergeben sich für die dort befindlichen Abschnitte des Deckbleches 3 im Vergleich zu den zwischen den Brückenrändern befindlichen Abschnitten des Deckbleches 3 unterschiedliche Belastungen beim Betrieb der Brücke, da sich im Mittelbereich der Brücke nur Unterzüge 4, im Seitenbereich jedoch ein Seitenblech 5 einerseits und je ein Unterzug 4 andererseits befinden. Um hier die Brückenplatte zu entlasten, sind auf den Enden des Querträgers 6 als Widerlager dienende Haken 20 befestigt, in die ein Rand des unteren Flansches des seitlich aussen gelegenen Trägers 17 eingreift. Damit ist ein Formschluss über die gesamte Länge des Hubes der Verlängerung 12 gegeben.

Das sich durch den Haken 20 ergebende Maul zum Eingriff des vorerwähnten Flansches hat eine solche Weite, dass bei einer Belastung der Brücke durch Auflegen der Verlängerung 12 auf die zu be- bzw. entladende Plattform eines Fahrzeuges der Haken 20 den Träger 17 abfängt in der Weise, dass die Stützkräfte vom Träger 17 über den Haken 20 in den Querträger 6 und nicht in das Deckblech 3 übertragen werden.

Das durch die Maulweite gegebene Spiel ist gerade so gross, dass eine ungehinderte Längsverschiebung der Träger im Hakenmaul stattfinden kann, dass dieses Spiel aber ohne weiteres überwunden wird, wenn der vorerwähnte Belastungsfall bei ausgefahrener Verlängerung 12 entsteht.

Die Erfindung nutzt somit das Vorhandensein eines kräftigen Querträgers 6 und eines über den Hub der Verlängerung 12 sich erstreckenden Vorsprungs in Form des Flansches der Träger 17.

Es versteht sich, dass das Widerlager zum Eingriff des Flansches abgewandelt und ggfs. anstelle des Flansches auch ein anderer Vorsprung genutzt werden kann, jedoch mit der Massgabe, dass es sich um Profil handeln muss, welches sich über den Hub der Verlängerung 12 erstreckt.

Es sei noch erwähnt, dass der Träger 17 nicht unmittelbar auf dem Querträger 6 aufliegen muss, vielmehr können hier Höhenausgleichselemente, ebenfalls auch für das Widerlager 20 benutzt werden.

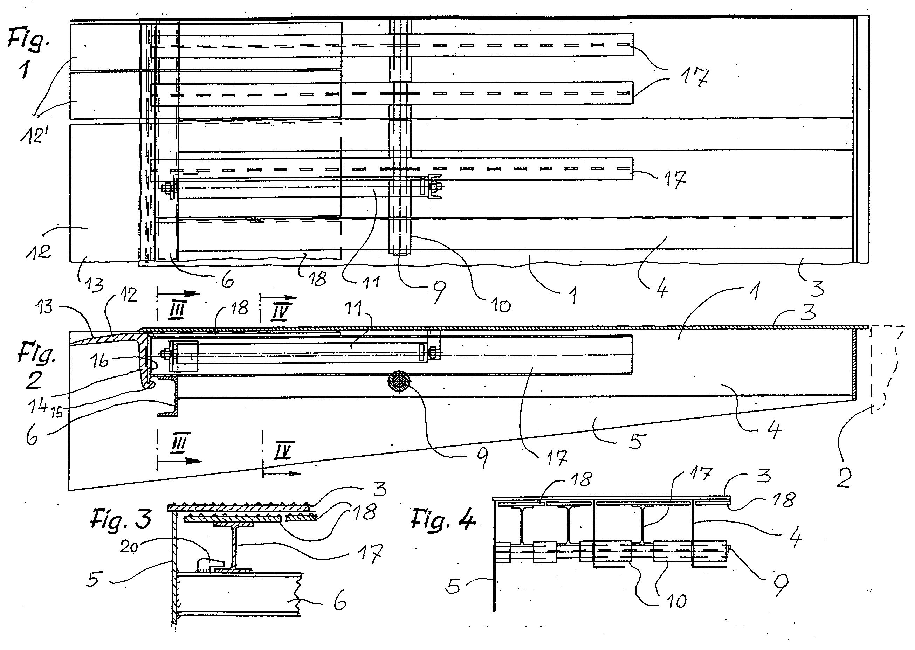

Ferner sei bemerkt, dass ein Widerlager 20 im Vergleich zu der Ausführung gemäss Fig. 3 auch auf der gegenüberliegenden Seite der Brücke anzuordnen ist, wobei dann sinngemäs das hakenförmige Widerlager 20 ebenfalls zur Mitte der Brücke zeigen würde.

## Patentansprüche

1. Überladebrücke für Rampen mit einer an ihrem hinteren, rampenseitigen Ende an der Rampe um eine waagerechte Achse verschwenkbaren Brückenplatte, die an ihrem freien Ende mit einer ein- und ausfahrbaren, zur Auflage auf der zu be-bzw. entladenden Plattform dienenden Verlängerung versehen ist, wobei die Verlängerung durch Unterzüge verstärkt, an den Rändern von senkrechten Seitenblechen begrenzt ist und mit einem Vorsprung ein an der Brückenplatte gelagertes, bei Belastung der Überladebrücke wirkendes Widerlager unterfasst, dadurch gekennzeichnet, dass bei einer Überladebrücke, die im vorderen Bereich mit einem sich von einem zum anderen Seitenblech (5) erstreckenden, die Unterzüge (4) unterfangenden Querträger (6) versehen ist, das Widerlager an dem Querträger (6) angeordnet und der Vorsprung von einem längs zur Verlängerung (12) verlaufenden Versteifungsprofil (17) der Verlängerung (12) gebildet ist.

2. Brücke nach Anspruch 1, dadurch gekennzeichnet, dass das Widerlager (20) hakenförmig gestaltet ist und das Versteifungsprofil (17) in das Maul des Hakens hineinragt.

3. Brücke nach Anspruch 1, dadurch gekennzeichnet, dass das Versteifungsprofil eine in der Brückenebene liegende Platte (18) unterfängt, die beim Ausfahren der Verlängerung (12) einen Teil der Fahrbahn der Überladebrücke bildet.

4. Brücke nach Anspruch 1, dadurch gekennzeichnet, dass das Versteifungsprofil ein Träger (17) ist, der mit seinem unteren Flansch das Widerlager unterfasst.

5. Brücke nach Anspruch 4, dadurch gekennzeichnet, dass der Träger (17) ein Doppel-T-Profil ist, dessen unterer, waagerechter Flansch dem Querträger (6) zugekehrt ist.

6. Brücke nach Anspruch 2, dadurch gekennzeichnet, dass auf jeder Seite der Brücke in deren Randbereich ein Widerlager (20) auf dem Querträger (6) angeordnet ist.

7. Brücke nach Anspruch 6, dadurch gekennzeichnet, dass der frei auslaufende Teil der beiden hakenförmigen Widerlager (20) zur Brückenmitte zeigt.
